# EUROPEAN PATENT SPECIFICATION

(11) **EP 1 104 534 B1**
(45) Date of publication and mention of the grant of the patent: **25.07.2007**
(21) Application number: 99914355.5
(22) Date of filing: 24.03.1999
(51) Int. Cl.: F16L 59/04, F16L 59/14

(54) **THERMOINSULATED PIPE MANUFACTURING DEVICE AND PROCEDURE**
VORRICHTUNG UND VERFAHREN ZUR HERSTELLUNG EINES WÄRMEISOLIERENDEN ROHRS
DISPOSITIFS ET PROCEDE DE FABRICATION DE TUBES ISOLES THERMIQUEMENT

(30) Priority: 26.03.1998 YU 13498
(43) Date of publication of application: 06.06.2001
(73) Proprietor: Miskovic, Slobodan, Lole Ribara 32 11312 Mihajlovac (YU)
(72) Inventor: Miskovic, Slobodan, Lole Ribara 32 11312 Mihajlovac (YU)
(74) Representative: Matschnig, Franz
(86) International application number: PCT/YU1999/000005
(87) International publication number: WO 1999/049260

(56) References cited:
- EP-A- 0 060 219
- CH-A- 583 873
- DE-A- 2 257 661
- DE-A- 2 543 787
- US-A- 3 439 075
- US-A- 3 793 411

## Description

### Technological Applications of the Invention

The invention includes the procedure and the device for the manufacture of thermally insulated pipes intended for all technologies which require reduced, i.e., controlled exchange of heat with the surroundings in order to prevent inadequate change of state of the fluid passing through the pipe.

### Technological Problem

This invention will solve the problem of the foamed polyurethane manufacturing of preinsulated pipes, regardless of the conduits and jacket pipes diameters, lengths or materials. The production is carried out by means of polyurethane injecting, in resting state. Furthermore, the procedure enables additional installations to be built into the insulating jacket, at any required position, in accordance with different technological requirements. The device and procedure exclude any possibility of occurrence of air bubbles within the insulation, or unequal expanded polyurethane density. The polyurethane foam slipping along the conduit and jacket pipe walls is avoided, because the expansion is taking place in vertical position and on the upper free surface. The invention will also solve the problem concerning the conduit and jacket pipe coaxiality, reducing deviation of the jacket pipe and conduit axis.

The procedure enables an on-the-spot-production, because it does not require any particular constructions. Furthermore, the device is portable, and any negative effects of the surroundings can be easily prevented and eliminated.

### State of Technology

This kind of product is commonly called the "preinstalled pipe" and it is usually related to the sphere of remote controlled heating in urban areas.

The current procedures used in the production of preinstalled pipes include the use of distance rings while the polyurethane is injected from one or both ends, under high pressures (up to 100 bars). The pipes are either inclined (about 30 degrees) or, in some cases, they are rolled along the elastically supported table so that better conduits and jacket pipes centricity could be obtained.

For this reason distance rings have to be used, together with special elastically supported tables and devices for pipes rolling and polyurethane foam injecting under high pressure. During the injection of the substance into the inclined pipes considerable eccentricity of the conduit and jacket pipe occurs, creating problems in building-in procedure and waterproof layers construction. At the same time, the polyurethane expansion conditions are becoming less favorable this way.

All of these ways of production require costly and large equipment (lifting appliances, elastically supported tables, rolling devices, etc.) due to the large weight of the preinsulated pipes. The pipes (1-12 m long) with the conduit diameter of 500 mm weigh about 1000 kg each, and even 3500kg in case of conduits with diameter of 1000 mm.

EP 0 060 219 A1 discloses a system for manufacturing thermally insulated pipes comprising an annular flange of elastomeric material for mounting between two concentric tubular members to define a mold chamber there between, said flange having an annular recess near the outer perimeter thereof for receiving an end of the outer of said tubular members, said flange having a through aperture between radially separated inner and outer surfaces and having a radially relieved surface such as to define with an outer surface of the inner of said tubular members a flow gap there between, said gap communicating with said through aperture.

A method of pouring a foamable plastic insulation between inner and outer pipes held in a vertical position is described in US 3,439,075.

Additional installation building into the insulated layer is very difficult. It requires the use of specially-shaped distance rings adjusted to any kind of insulation while the possibility of fault in polyurethane injecting cannot be eliminated. This cannot be accomplished when conduit is not made of steel or the like material, since softer materials keep the conduit from retaining its desired shape. As an example, a method for manufacturing insulated pipes having one or more flow conduits is disclosed in the US 3,793,411.

### Main Purpose of the Invention

The thermoinsulated pipe manufacturing procedure and device enable the internal conduit insertion with all its installations (if being built in) by means of roller supports, while the necessary centering is being accomplished by means of the lower and upper tools for the pipes closing and supporting. Lifting this assembly block into the vertical position, by use of the external guide, and its suitable positioning according to the internal guide enables the polyurethane foam to be poured in. Installations which are being built into the jacket insulation are supported and held by the upper and lower tools.

Through the upper tool, the injection syringe is put into the inter-space for the thermal insulation as deep as 0.5m of the lower tool height. Considering the injected polyurethane amount and its reaction speed, the steady lifting of the syringe is continued until its removal from the inter-space after the calculated amount has been injected.

Then the upper tool holes are being closed by plates, and the obvious excess of polyurethane is escaping through a shorter transparent elastic pipe, by expansion and under pressure. The transparent pipe diameter and length determine the polyurethane leakage resistance, as well as the pressure under which the insulating layer expansion is being completed. In some extreme cases, side guides can be used for jacket and conduit axes centering. If the conduit is not made of metal (thus it has not the needed strength), the same necessary position of the external guide is being maintained by adjusting the upper tool in order to center and supported at the same time, while the axle direction is being ensured by the weight through the lower tool.

The main advantage of this invention is that it does not require costly equipment or that it sets any limitations to the conduit diameters or lengths. Quite on the contrary, it enables the production of preinsulated pipes of great variety of materials - depending on the building-in site and conditions.

### A Short Description of the Figures

The invention is presented in Figures 1-54.
- Fig. 1: Equipment needed for the production of the thermally insulated pipes in vertical position while the insulating material is being injected.
- Fig. 2: Thermally insulated pipe with its basic dimensions.
- Fig. 3: Correlated position s of conduits, jacket pipe and guides.
- Fig. 4: Lower stand and tower supports.
- Fig. 5: Horizontal view of the lower stand.
- Fig. 6: Side view of the upper stand and the holder.
- Fig. 7: "A" view from Figure 6.
- Fig. 8: Lower tool with the external guide support.
- Fig. 9: Conduit and jacket pipe correlated position s in the lower tool.
- Fig.10: Upper tool cross-section.
- Fig. 11: Upper tool from Figure 10 - view from above.
- Fig. 12: External guide support from Figures 1, 8 and 9.
- Fig. 13: External guide support from Figure 12 - view from above.
- Fig. 14: Section B-B from Figure 15 with the flat grid support as a boom
- Fig. 15: Side view of the external guide with the boom.
- Fig. 16: View "B" from Figure 15.
- Fig. 17: View "C" from Figure 15 with the flat grid support as a boom.
- Fig. 18: View "C" from Figure 15 with the space grid support as a boom.
- Fig. 19: Section B-B from Figure 15 with the space grid support as a boom.
- Fig. 20: Correlated positions of the conduit and the jacket pipe in the upper tool, with the upper tool connected to the internal guide lock (Fig. 1).
- Fig. 21: Section C-C from Fig. 20.
- Fig. 22: Longitudinal section of the correlated positions of the conduit and the jacket pipe with parts of the lower and upper tools at the point of initial injection of the insulating material - polyurethane (Fig.1).
- Fig. 23: Mixer (Fig. 22) - cross-section
- Fig. 24: Partial cross-section of Fig.23.
- Fig. 25: Figure 23 - view from above.
- Fig. 26: Cross-section of the upper tool from Fig. 10 and Fig. 20 in the procedure of the final injection of the insulating material - polyurethane.
- Fig. 27: View "N" from Figure 26 and the way of fixing the cover from Figures 26, 29 and 31.
- Fig. 28: Initial location of the wedge while entering the axle of the lower and upper tool, with the external and internal guides from Figure 1- as given in Figure 3.
- Fig. 29: Upper tool cover (Fig. 10) - view from above.
- Fig. 30: Final position of the wedge while entering the axle of the lower and upper tools, with the external and internal guides from Fig.1 as given in Figure 3.
- Fig. 31: Section R-R from Fig.29.
- Fig. 32: One of the possible positions of the additional and elastic installations within the insulating space.
- Fig. 33: View of the supports of the elastic and additional installations such as water penetration detecting cables.
- Fig. 34: Position of the additional installations on the conduit, such as oil pipeline side heating installation.
- Fig. 35: Setting up the additional elastic installation in the insulation interspace.
- Fig. 36: Conduits cart.
- Fig. 37: Front view of the conduits cart from Figure 36.
- Fig. 38: Conduit entering the jacket pipe - correlated positions.
- Fig. 39: The way of adjusting the input height in entering the conduits, for different thickness of the jacket pipes.
- Fig. 40: Base cross-section from Figure 39.
- Fig. 41: Side view of the cart leader.
- Fig. 42: Upper surface of the cart leader.
- Fig. 43: Conduits and jacket pipes preparation for setting up the lower and upper tools.
- Fig. 44: Acceptance cart with the upper and lower tools at the point of their putting onto the conducting and jacket pipes.
- Fig. 45: Section of the lower tool for the elastic conducting and jacket pipes.
- Fig. 46: Clamping ring for fixing the elastic conducting and jacket pipes to the tool from Figure 45.
- Fig. 47: Section of the lower tools for elastic jacket pipes with the external guide support.
- Fig. 48: Section of the lower tool for the elastic conduits.
- Fig. 49: View "M" from Figure 47.
- Fig. 50: Section of the upper tool for the elastic conduits and jacket pipes with the external guide support.
- Fig. 51: Side view of the holder (Fig. 6) adapted for supporting height H adjusting.
- Fig. 52: Adjusting of the holder height (Fig. 51).
- Fig. 53: Manner of accepting and setting up the conduits and jacket pipes into the holder with the upper and lower tools from Figure 44.
- Fig. 54: Side view of the conduits and jacket pipes assembly with the upper and lower tools and the positioned external guide with the boom in the position of acceptance by the winch rope for lifting to the vertical position.

### Detailed description of the invention

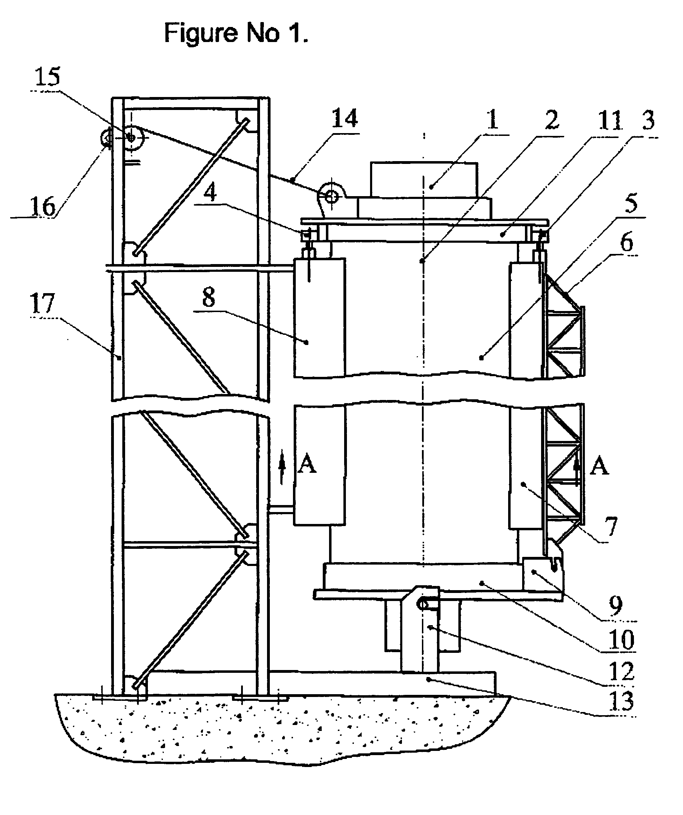

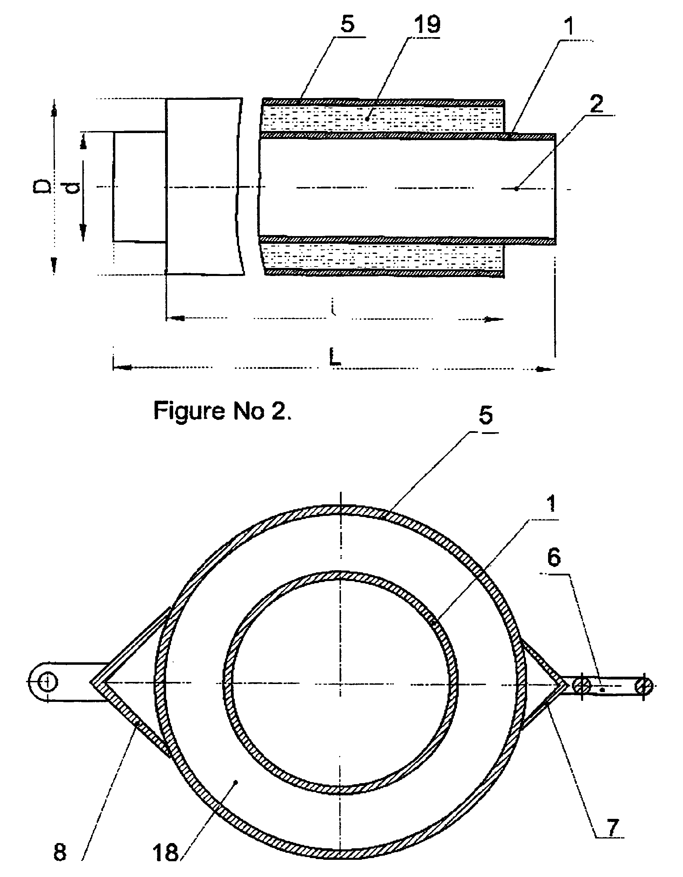

The figures show the procedure and devices used in the production of the thermally insulated pipes (2) with or without the additional installations (Fig.32) within the insulating layer (19). Figure 1 shows the device enabling the production of the thermally insulated pipes (2). The pipes view, with the basic dimensions, is shown in Fig. 2.

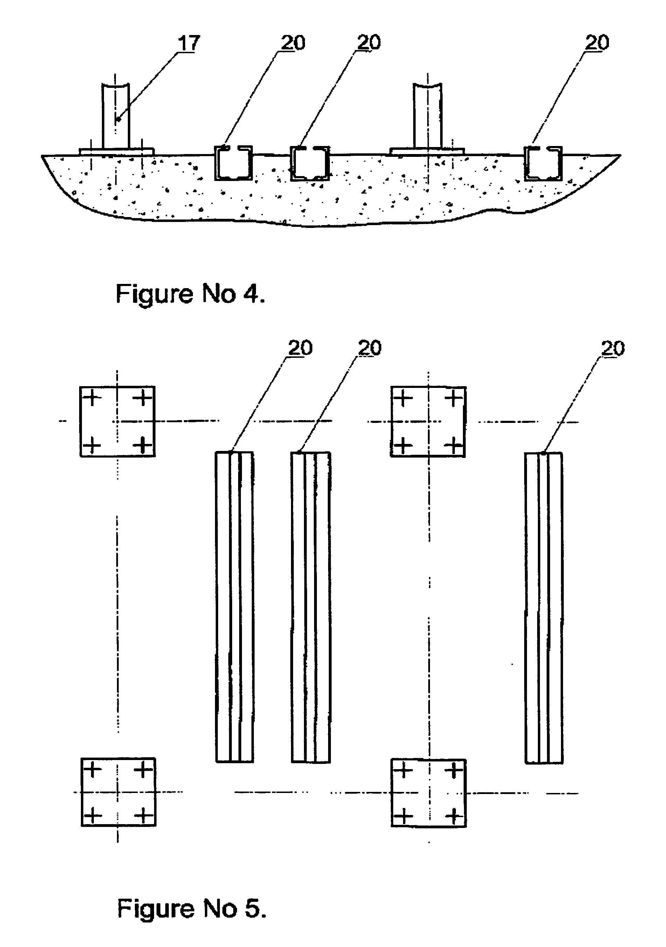

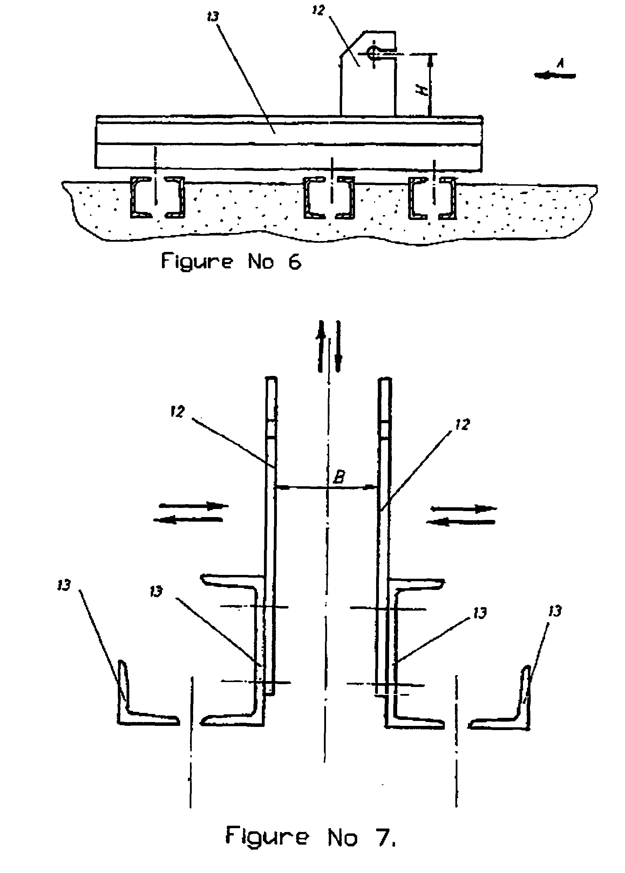

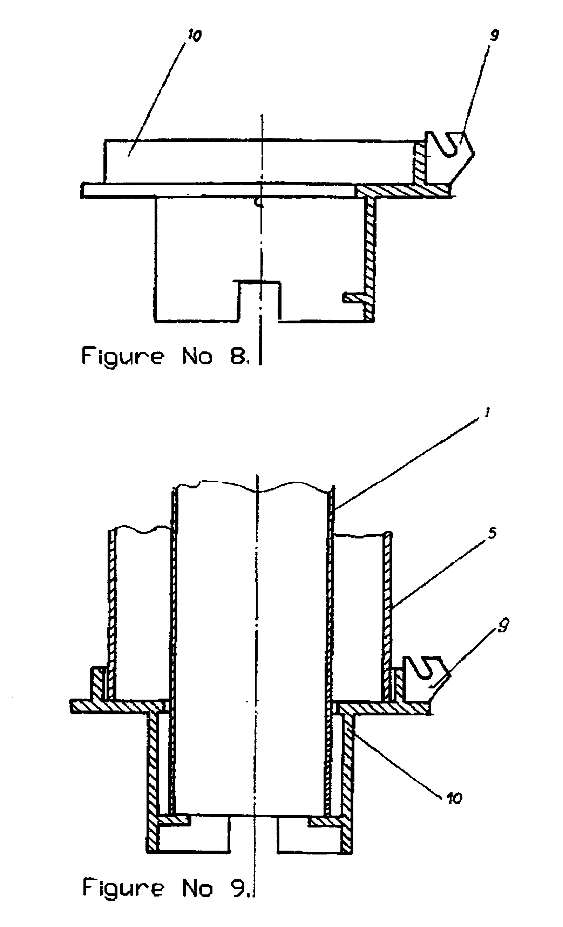

In order to secure the said procedure of manufacturing the pipe (Fig. 2), it is necessary to put the conduit (1) and jacket pipe (5) into the positions as given in Fig. 3, with the presented guides (7 and 8) determining the position of the jacket pipe (5). To obtain the vertical position of the conduit (1) and the jacket pipe (5) assembly, the lower stands (20) and the tower (17) are used (Figures 4 and 5).

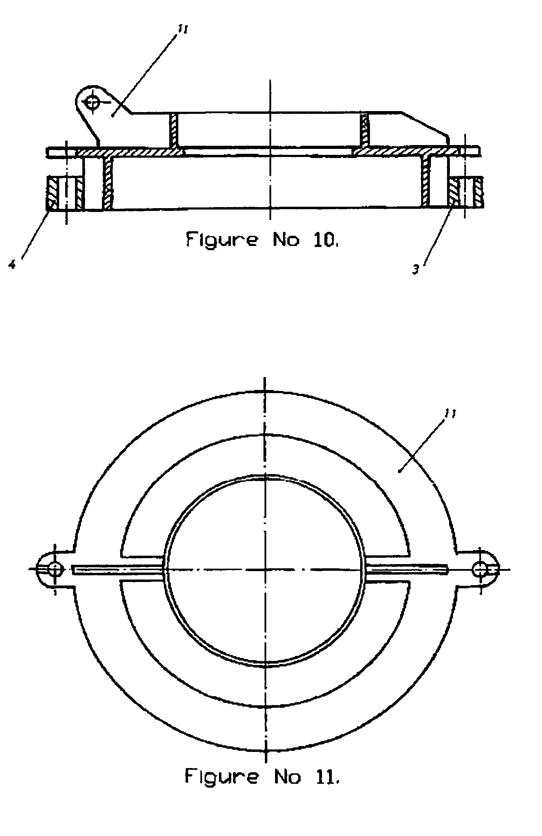

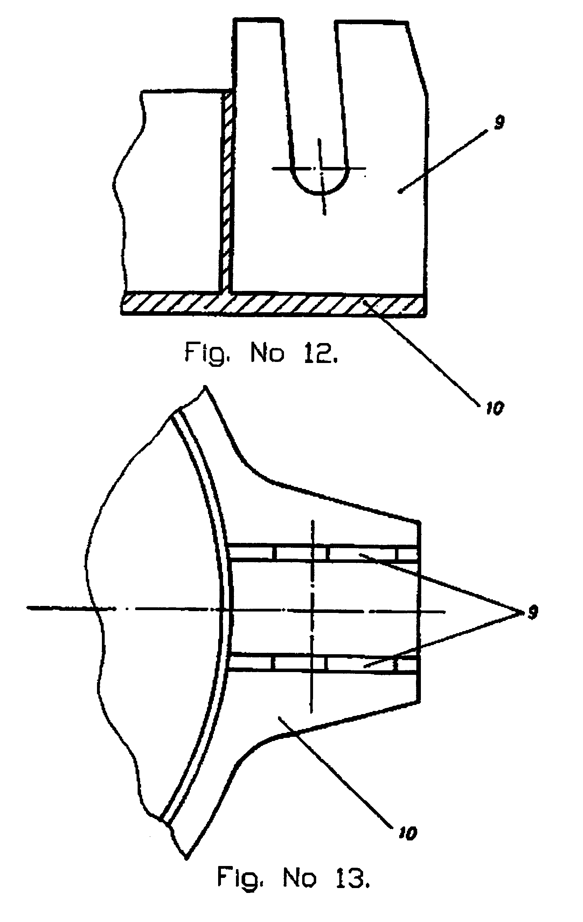

Due to the great variety of the conduit (1) diameters (from 20 to 2000mm), which is not limited in the procedure, it is recommended to use the adjustable holder (12) from the upper stand (13). By moving the holder (12) along the vertical and the stand (13) along the horizontal lines, they are being adjusted to the diameter of the jacket pipe (5). For the diameter range from 20 mm to 2000 mm, it is enough to have 3 to 4 different adjustable holders (12), though it is sometimes possible to use one tool only. H and B dimensions (Fig. 6 and 7) are directly proportional to the jacket pipe (5) diameter.

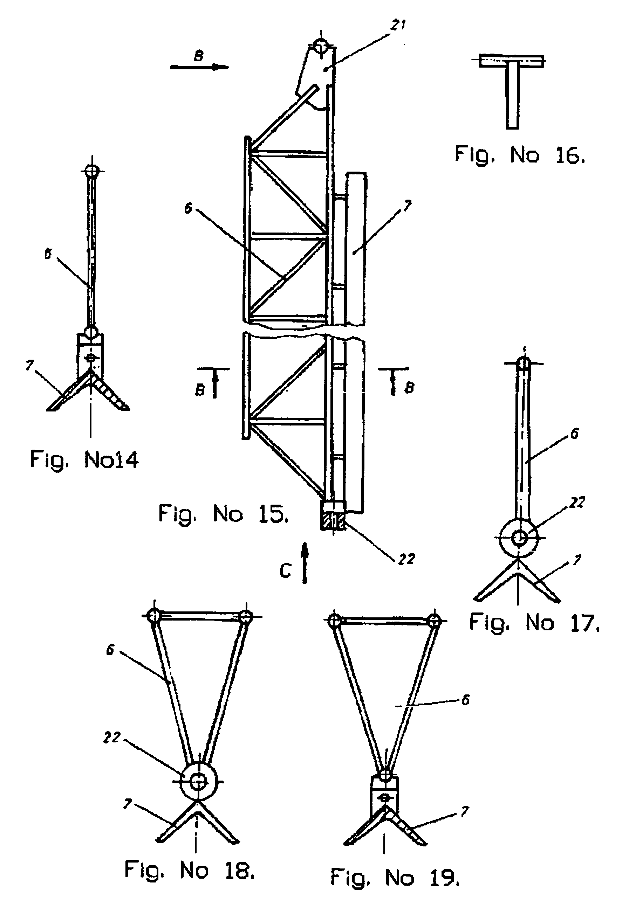

In order to obtain the position of an external guide (7) as given in Fig. 3, and therefore the centricity of the conduit (1) within the jacket pipe (9), the lower tool (10) is used together with an external guide support (9) as shown in Fig. 8.

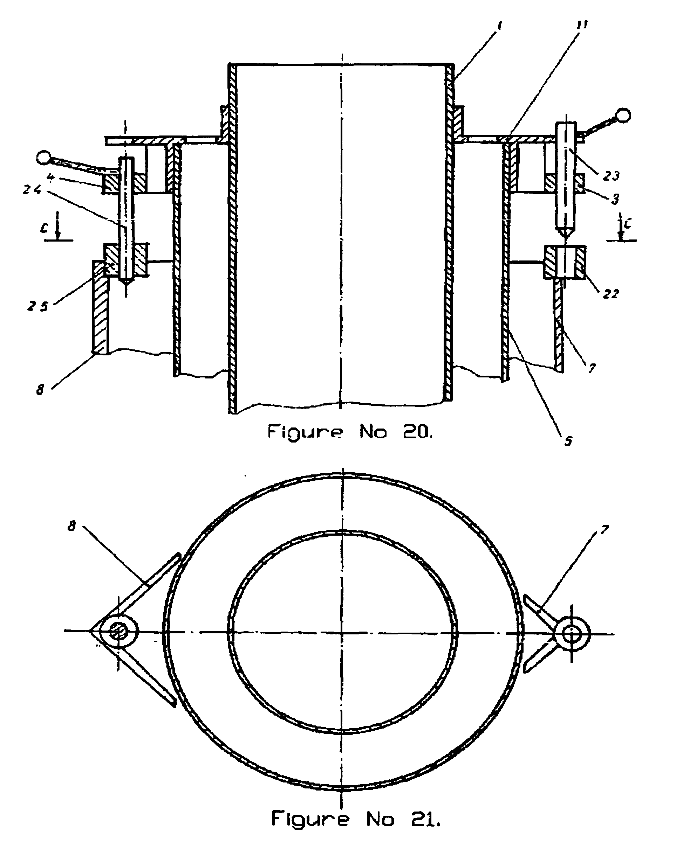

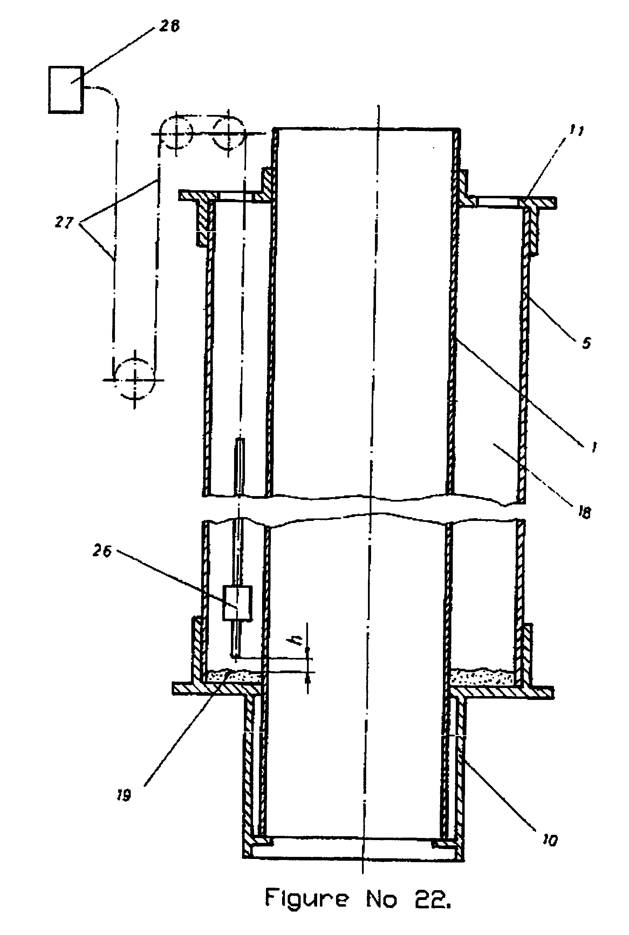

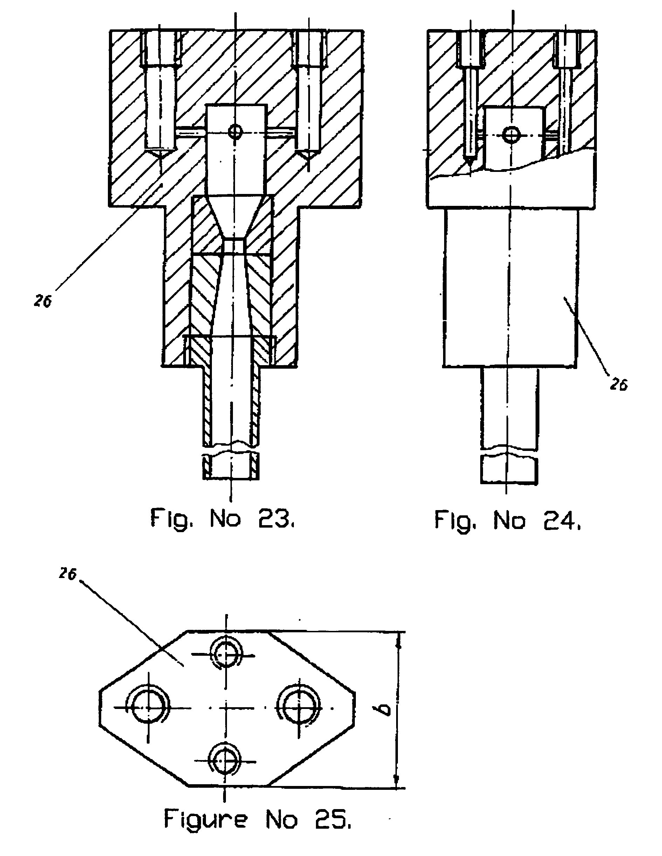

Fig. 9 shows the implementation of the axial centricity of the conduit (1) and the jacket pipe (5) by means of the lower tool (10) as shown in Fig. 8. The axial centricity of the conduit (1) and the jacket pipe (5) on the upper end as given in Fig. 1, is accomplished by means of the upper tool (11) as shown in Figures 10 and 11. Together with the upper tool (11), the same figures show the locks of the external guide (3) and the internal guide (4).

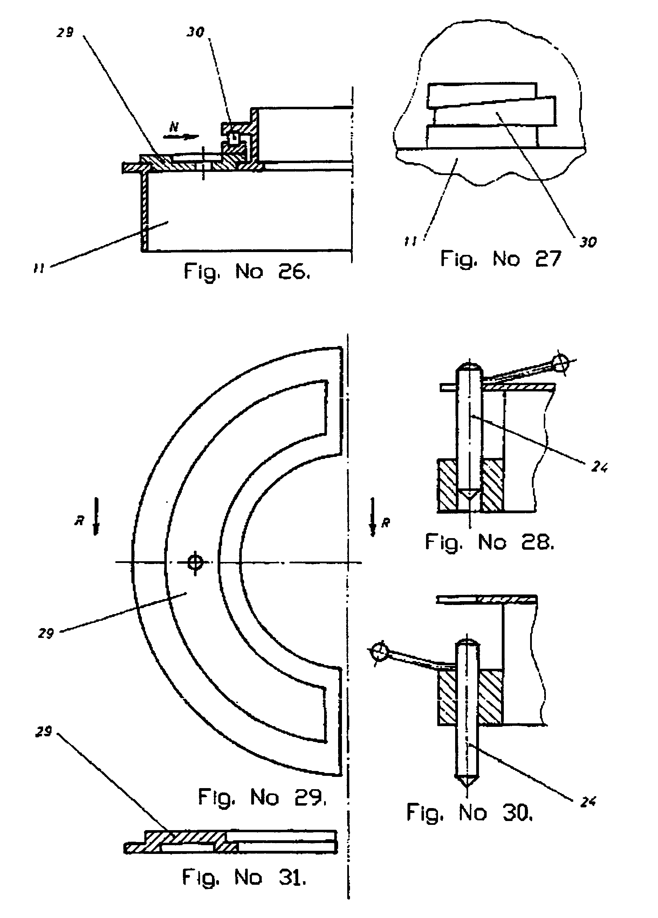

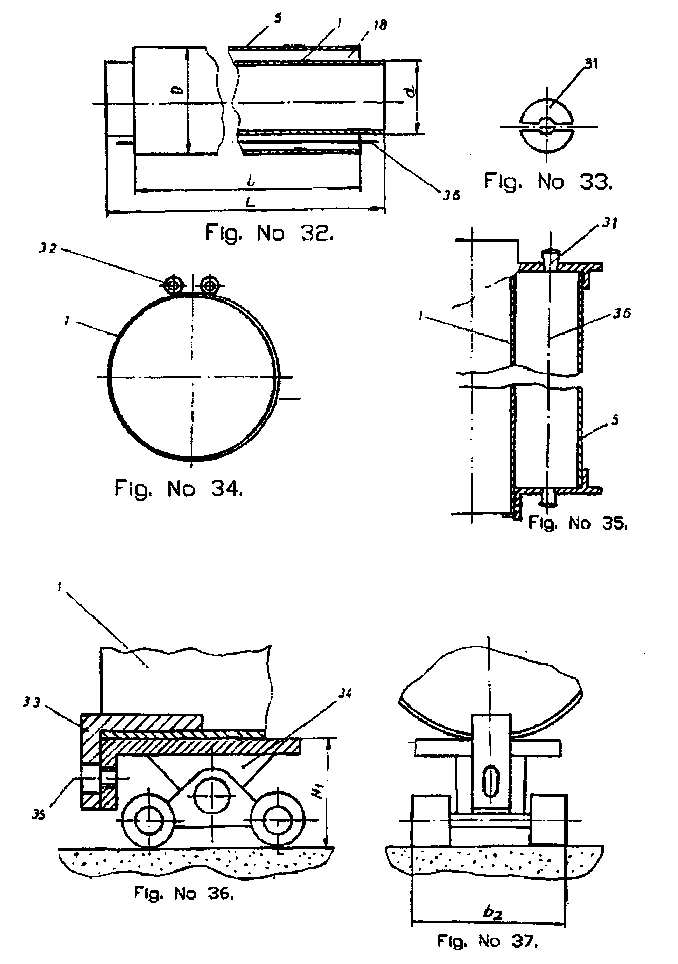

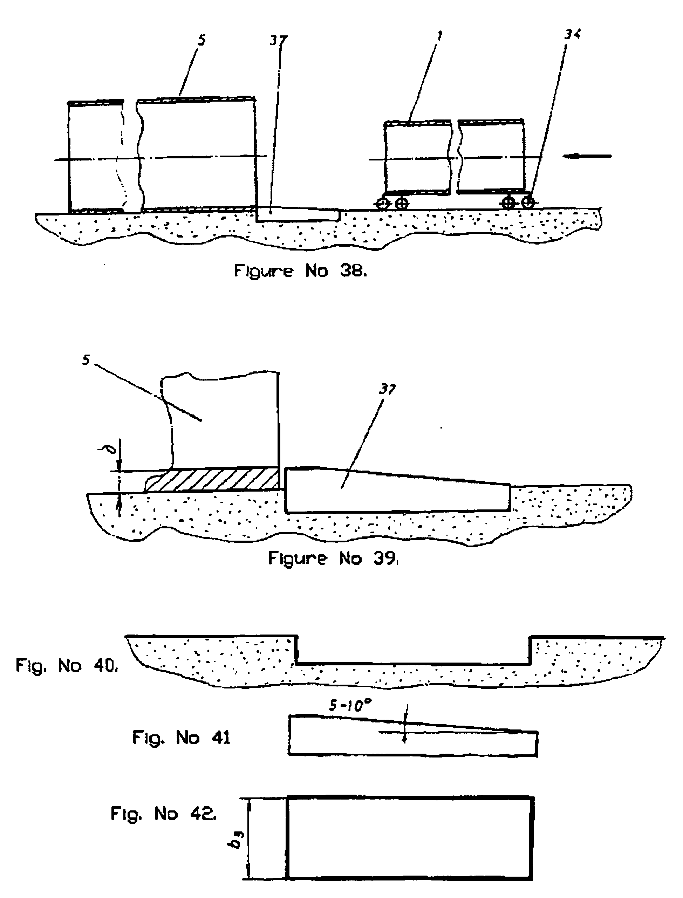

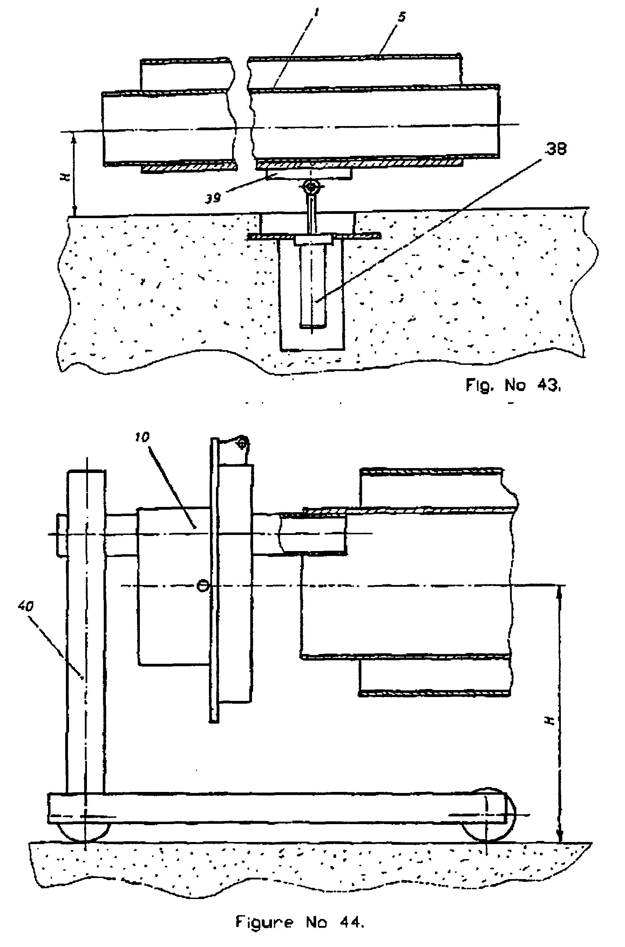

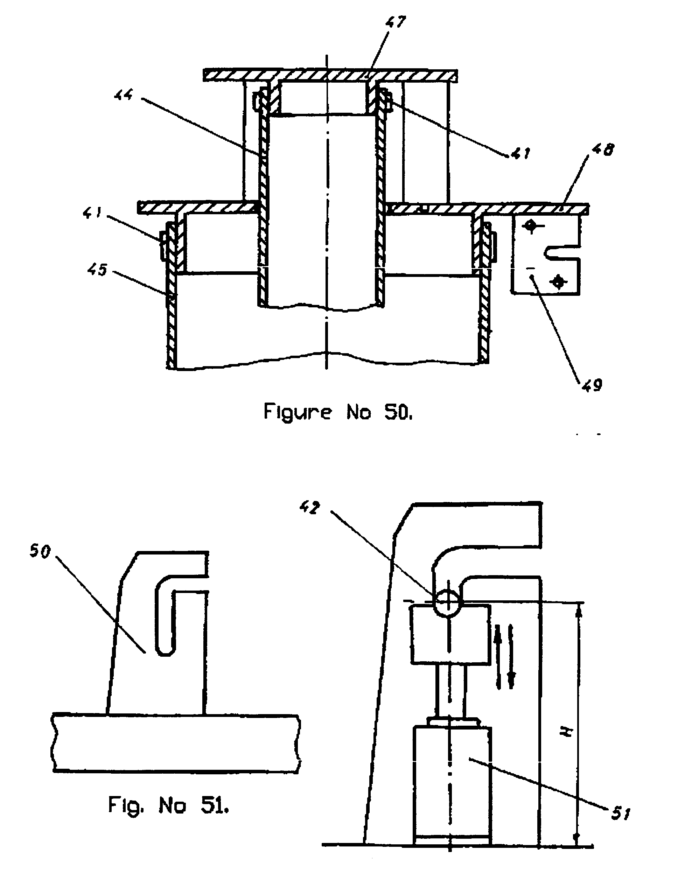

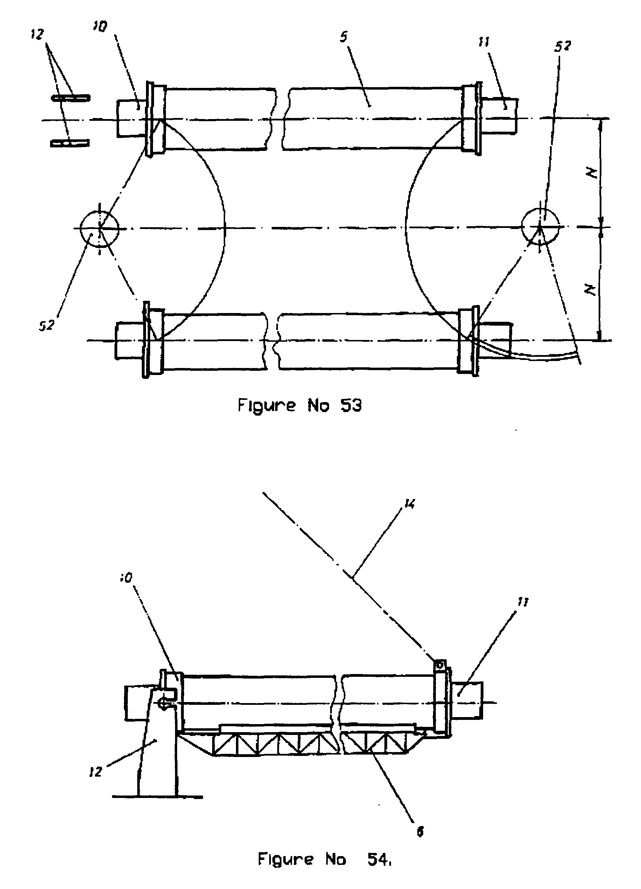

Figures 12 and 13 show the view and position of the external guide support (9), while the external guide (7) fixed to the boom (6) is shown in Fig. 15. The same figure shows the position of the boom lower support (21) and the boom upper support (22). Depending on the thermo-insulated pipe diameters and lengths (2), either boom (6) of the flat grid construction is used (Fig. 14; section B-B from Fig. 15) or the boom (6) with the space grid given in Fig. 19 as section B-B from Fig. 15.

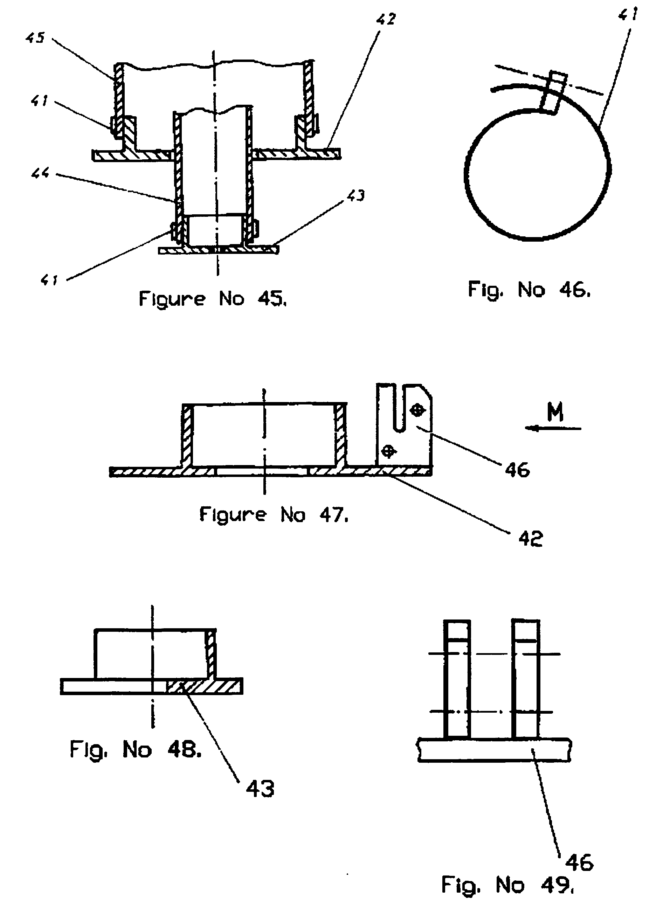

Leaning the boom (6), across the lower boom support (21), in the external guide support (9) and by putting the boom (6) into the position as presented in Figure 20, towards the upper tool (11), joining is accomplished by the external guide wedge (23) through the upper support (22). In this way, the jacket pipe (5) tangibility and the axial centricity with the external guide (7) are being secured. The position and the view of the lower boom support (21) are given in Fig. 12 and 13, while the upper boom support (22) is presented in Fig. 17 and 18.

After having all these elements placed in their proper positions and the assembly put into the vertical position as described in Fig. 1, the internal guide (8), fixed to the tower (17), is being centered through the tower support (25) and the guide wedge (24). The internal guide (8) placing into the tangibility position of the jacket pipe (5) is preceded by putting the holder (12) into the position which makes it possible for the external guide generator (8) along which it touches the external pipe jacket (5), to be also tangent to the internal part of the lower tool (10), as described on Fig 9. In this way, the conduit (1) and the jacket pipe (5) centricity and coaxiality requirements are satisfied (Fig. 3). This completes the procedure of setting the conduit (1) and the jacket pipe (5) assembly (as presented in Fig. 1).

Fig. 22 shows the way of injecting the insulation, i.e. polyurethane (19) into the insulating space (18) by means of a mixer (26). The mixer is first lowered towards the lower tool height of 0.5m (h=0.5m), and then the insulation injection process is started by switching on the polyurethane pump (28). Together with the injected polyurethane amount, the mixer (26) is lifted too, so that the given height (h) is kept approximately above the expanding surface of the insulating material (19), up to the point when the total calculated amount is injected into the insulation space (18), after which the mixer (26) is taken out.

The opening of the upper tool (11) is closed by a cover (29) which is being fixed by the fixture (30) (Figures 26, 27, 29 and 31). The excess of the insulating material (19) escapes through the opening in the cover (29) into which a short transparent pipe is previously inserted with the purpose of increasing the pressure up to one bar, by increasing the flow resistance, in the top layer of the expanded insulating material (19) according to the manufacturer's recommendations. This is the end of the insulation procedure. The result is a thermally insulated pipe (2), which was the task to be accomplished by the above described procedure.

The mixer (26) used in the procedure has a width (b) which is 2-5mm smaller than the insulating layer (19) thickness. Its cross-section view is shown in Fig. 23, view from above in Fig. 25, and its partial section in Fig. 24.

In order to reestablish the horizontal position of the vertically positioned assembly of the thermoinsulated pipe (2) with the tools as presented in Fig. 1, it is being separated from the tower (17) by transferring the guide wedge (24) from the position as shown in Fig. 30 to the position as shown in Fig. 28. The horizontal position is secured by means of the electric winch (15) through the rope (14). The further take-down procedure is identical to the reverse procedure of the tools and the assembly setting during the production process.

The presence or the absence of the additional installations (32) and elastic installations (36) does not affect the procedure of inserting the conduit (1) into the jacket pipe (5). If additional heating or cooling of the fluid in the transparent pipe is needed, additional installations (32) are set up on the external side of the pipe (Fig. 34). These are usually rigid installations and they are fixed directly to the conduit (1), with or without holders.

In case of elastic additional installations (36), installed into the insulation space (18) under the condition of taking the particular position between the conduit (1) and the jacket pipe (5), holes are made in the lower (10) and the upper (11) tools through which the elastic installation are (36) guided, being fixed by the holder (31) as shown in Figures 33 and 35.

The conduit (1) with the additional installations (32) or elastic installations (36), or without them, is being placed on the cart (34) as described in Fig. 36. The height H1 is 2-5mm lower than the double thickness of the insulating layer (19), see also Fig. 36. The way of connecting the conduit (1) to the cart (34) is presented in Figures 36 and 37, and it is accomplished through the limiter (33) and the screw (35). When the conduit (1) is placed (by its ends) on the cart (34), it is put into the position presented in Figure 38, and, through the cart leader (37) inserted into the jacket pipe (5).The cart leader (37) shape is given in Figures 41 and 42, its position is presented by Fig. 39, and the base view is shown in Fig. 40. The shape of the base where the previous operation is carried out is also presented in Fig. 43, along with the procedure through which the conduit (1) and the jacket pipe (5) are prepared to be set up for the upper (11) or lower (10) tools.

It is accomplished by erecting the hydraulic platform (38) across the support (39) up to the height H as given in Fig. 43. At this point, the conduit (1) is held by the cart ends (40), on which the lower tool (10) and the upper tool (11) are placed, respectively. This is shown in Fig. 44. When the conduits (1) and jacket pipes (5) are rigid enough, the procedure is being continued as shown in Fig. 53 (view from above, presenting the acceptance of the conduits (1) and jacket (5) pipes assembly), by means of the lower (10) and upper (1) tools with two revolving pillar cranes (52). It is then transferred into the position towards the holder (12) when the external guide (7) with the boom (6) is placed into the lower (10) and upper (11) tools. Now, all the elements together are introduced into the holder (12), while the upper tool (11) is being held. By means of the rope (14), the assembly is being separated from the revolving pillar cranes (52) and lifted into the vertical position (Fig.1) by means of the electric winch (15).

When the conduits (1) and jacket (5) pipes are not rigid enough to stand vertically inside the lower tool (10), the lower tool (Fig.8) and the upper tool (Fig.10), the external guide support (9, Fig.12), the holder (12, Fig.6) and the external guide lock (3, Fig.10) are being exchanged in order to eliminate the problem related to the construction strength, as described below.

The holder (12) is replaced by the hydraulic lower tool support (51) as in Figures 51 and 52, while the screwed pipe clip (41) (as described in Fig. 46) is used to fit the lower tool of the elastic conduit (43), lower tool (42) of the elastic jacket pipe as well as the upper tool (47) of the elastic conduit and the upper tool (48) of the elastic jacket pipe. Fig. 45 shows the lower tool (43) of the conduit and the lower tool (42) of the elastic jacket pipe. Fig. 47 shows the lower tool (42) of the elastic jacket pipe, and Fig. 48 shows the lower tool (43) of the elastic conduit.

Fig. 50 shows the correlated positions of the elastic conduit (44), elastic jacket pipe (45) with the upper tool (47) of the elastic conduit (44) and the upper tool (43) of the elastic jacket pipe (45); here, the screwed pipe clip (41) is used to fix tight the elements. On the boom (6) with the external guide (7), the lower boom support (21) is being exchanged, according to Fig. 47, to enable the rigid connection with two circular tapered wedges.

The upper boom support (22) is replaced by the upper boom support (49) for elastic pipes, as shown in Fig. 50. The support is now used to make the tight connection with the upper tool of the elastic jacket pipe (48), by means of two circular tapered wedges through the holes. In the procedure for lifting the assembly, the external guide (7), through the boom (6), is maintaining the tight connection between the lower tool (42) of the elastic jacket pipe and the upper tool (48) of the elastic jacket pipe up to the point when the vertical position is obtained thus enabling the same degree of centricity as in the strong conduits (1) and the jacket pipes (2), i.e., through the support on the tower (25). Now, the whole assembly is being supported by the tower support (25), because lowering the hydraulic support (51) of the lower tool (42) of the elastic jacket pipe (42), due to the gravity and the weight of the lower tools, enables, by tightening, the alignment of the elastic jacket pipe (45) and the elastic conduit (44). The required strength of the elastic conduit (44) is obtained by blowing the air into it through the hole in the lower tool (42) of the elastic conduit (44). In this way, the preparation is complete for injecting the insulation material (19), i.e. polyurethane.

A preferred embodiment of the system for manufacturing thermoinsulated pipes is described below (with references to the drawings):

The tower (17) is constructed as a vertical space grid made of square profiles with angular pillars (U 8 profiles) for working platforms at 6.8 and 12.8 m of height, and profiles (L 60x60x5) for the remaining members of the grid construction. It is used as the basic holder and support for the rest of the equipment. On it, there is an electric winch (15) with tie rods (16) made of steel ropes and an internal guide (8) made of profiles (L 100x100x10, 11.5m long), the internal guide (8) built vertically into the middle of the front vertical side of the tower (17) which accepts the previously prepared conduit (1) with the additional heating or cooling installation (32) made of steel pipe. The installations (32) are welded by holders to the conduit (1).

The conduit (1) is fixed to a cart (34) by a limiter (33) in form of an L profile with a hole and a screw (35), the cart (34) having four wheels and oscillating axles in-between. Via the cart lead bar (37) in form of a wedge with b3 width, longer 10 to 30 mm than the cart's width (its b2 width is equal to the thickness of the insulation (19)), i.e., from 30 to 120 mm for the conduits (1) with more than 1000 mm diameter) the conduit (1) is horizontally pushed into the jacket pipe (5) leaning on an acceptance cart (40).

For this purpose the conduit is lifted by a hydraulic platform (38) having one hydraulic cylinder with a front supporting on a basic steel plate (about 20 mm thick) topped by a groove support (39) in form of a pipe segment. The piston stroke is 100 mm longer than the height H of the holder (12). On the acceptance cart (40) which consists of three wheels as supports, a two-pipe pillar and a horizontal arbor (about 1m long, placed on the height of about 1m) the upper tool (11) and the jacket pipe (5) are previously put on its end. The acceptance cart (40) accepts the conduit (1) and the lower tool (10) consisting of two steel rings of diameters 1 to 2 mm longer than the conduit (1) and the jacket pipe (5) diameters and a circular plate with central opening 1 to 2 mm larger than the conduit (1) diameter and with two side pins on the circular plate for supporting in the holder (12).

On one side of the lower tool (10) there are two plates with a cut as the external guide support (9) where the external guide (7) is leaning on, which is made of profiles (L 60x60x5) and 11.5 m long with a triangular plate and a pin on its end as a lower support (21).

The boom (6) is of a flat or space grid construction and the upper support (22) of the boom (6) is constructed as a short pipe with walls about 50 mm thick, the external guide wedge (23) passing through the external guide lock (3) in shape of a short pipe with the inside walls of about 50 mm diameter, in both cases constructed as an assembly with air gaps.

The upper tool (11) also consists of two rings with inside diameters 1 to 2 mm longer than the conduit (1) and the jacket pipe diameters and a circular plate with a central opening 1 to 2 mm larger than the outside diameter of the conduit (1) bearing the built-in locks of the external guide (3) and the internal guide (4) which determine the overlapping of the conduit (1) and the jacket pipe (5) axles, while the two-part cover (29) is constructed as a semi-segment of the circular ring reinforced along its edges to lean in the upper tool (11) ends the process of injecting the insulation (19) under pressure. It is firmly fixed by the fixing device (30) in the shape of an inclined wedge, and in case of elastic installations (36) such as cables regularly built-in in the insulation (19) itself, the elastic installations holder (31) has the shape of a circular tapered two-part wedge with self-locking cone angle.

All of these enables the two-component insulating material (19) mixer (26), constructed with a circular chamber and a tapered contraction followed by an enlargement of the passage leading to the outlet pipe, to do the mixing by the components jar collision and by letting in additional air, on the height about 0.5m above the expanding surface of the insulating layer.

When the conduits (1) and the jacket (5) pipes are not strong enough, they cannot themselves maintain the vertical position as described, other tools are used, i.e., the lower tool (10) and the upper tool (11) are replaced by the lower tool of the elastic conduit (43) in the shape of a circular plate with a circular ring whose outside diameter is equal to the inside diameter of the conduit (1). In the central hole of the plate, a valve is placed for blowing-in the air. The lower tool of the elastic jacket pipe (42) is a plate with a central opening which is 1-2 mm larger than the diameter of the elastic conduit (44) and a ring with the outside diameter which is 1-2 mm smaller than the inside diameter of the elastic jacket pipe (45). The external guide support along the plate edge outside the ring for the elastic jacket pipe (46) is constructed as two plates with two tapered openings and a cut for the lower boom support pin (21) to pass.

The upper tool of the elastic jacket pipe (42) has three additional steel plate 150-200 mm long to support the upper tool of the elastic conduit (47) above the upper tool of the elastic jacket pipe (48) which has the support of the upper boom of the elastic pipe (49) like two plates with a cut and two centrical openings for the tight connection of the boom (6). The hydraulic lower tool support (51) consists of a hydraulic crane with a wedge topped by a plate with semi-circular cut to accept the lower tool of the elastic jacket pipe which enables, when lowered, the whole assembly to lean on the support on the tower (25) and the elastic conduits (44) and jacket (45) pipes are tightened by gravitation.

### The following describes a manufacturing method for thermally insulated pipes:

A conduit (1) for various fluids, with or without additional installations (32) and elastic installations (36), is pushed into a jacket pipe (5) by means of a cart (34) along a horizontal bolster by use of a cart lead bar (37). On the ends of the conduit/jacket pipe-assembly a lower tool (10) and an upper tool (11) are placed by means of a reception cart (40) and a hydraulic platform (38) and into the holder (12).

After placing a boom (6) having an external guide (7) the assembly is lifted by a rope (14) into the vertical position, which is determined by an internal guide (8). Then, the conduit (1) is aligned with the jacket pipe (5) via an internal guide lock (4) while the mixer (26) is pushed into the insulation space (18) as deep as 0.5m into the lower tool (10). At the same time, the injected insulation amount (19) it is lifted vertically, stopping at 0.5m distance above the expanding insulating material (19) until the entire calculated amount has been injected. The mixer (26) is then taken out through the upper tool (11), closed by the cover (29) and fixed by the fixing device (30). The existing excess of the injected insulating material (19) escapes through a hole in the cover (29), which completes the procedure.

The above described procedure and devices are easy to move, so they enable production on the locations which are most convenient for building-in and production. In order to enable the procedure implementation even under bad weather conditions, for only for people and raw materials have shelters from bad weather, it is possible to install a heating or a cooling device located under the lower tool (10) through the conduit (1) in order to create necessary conditions by heating or cooling, respectively.

This invention enables permanent chain production of the thermally insulated pipes by placing two or more sets of the above named tools next to the tower (17). In this way, by convenient placing of the raw material warehouses, and by using the conveyers and the corresponding lifting mechanisms, the production procedure is being carried out, directed normally to the tower (17) up to the point of the polyurethane pouring in, after which it proceeds laterally towards the warehouse or the site where it is further transported from.

Naturally, the invention is not only limited to the use of polyurethane as a thermo insulating material. Modifications are possible, and other equivalent technological materials can be used, as well as equivalent technical devices, without leaving the patent protection domain.

The invention can be applied in the production of thermally insulated pipelines for urban heating from the heating plants, for magistral and secondary distribution lines, as well as for the oil pipelines, regardless of the fact whether it is or not necessary to heat the oil in the pipeline.

## Claims

1. A system for manufacturing thermally insulated rigid pipes comprising an arrangement consisting of a conduit (1) inserted into a jacket pipe (5), the inner surface of the jacket pipe (5) and the outer surface of the conduit (1) creating an interspace (18) to be filled with an expanding isolating material (19), the system consisting of a lower tool (10) and an upper tool (11) to be installed at each end, respectively, of the conduit/jacket pipe arrangement,
**characterized in that**
the system further comprises:
a tower (17) with an electrical winch (15) on the top, with tie rods (14) made of steel ropes for moving the conduit (1) / jacket pipe (5) arrangement into a vertical position prior to the filling with isolating material (19),
an internal guide (8) built vertically into the middle of the front vertical side of the tower (17), which limits the vertical position of the conduit (1) / jacket pipe (5) arrangement, the internal guide (8) being connectable to the upper tool (11) by means of an internal guide lock (4),
a boom (6) comprising an external guide (7), the boom (6) being connectable to the upper tool (11) by means of an external guide lock (3) and to the lower tool (10) by means of an external guide support (9) for centering the conduit (1) within the jacket pipe (5),
and a stand (13) comprising a holder (12) for receiving the lower tool (10).
wherein the lower tool (10) consists of a circular plate having a central opening greater than the outside diameter of the conduit (1) and two rings attached to either side of the circular plate, wherein the diameters of the two rings are greater than the diameters of the conduit (1) and the jacket pipe (5), respectively, the circular plate having two pins at its edge for connecting the lower tool (10) to a holder (12),
and wherein the upper tool (11) consists of a circular plate having a central opening greater than the outside diameter of the conduit (1) and two rings attached to either side of the circular plate, wherein the diameters of the two rings are greater than the diameters of the conduit (1) and the jacket pipe (5), respectively, the circular plate bearing built-in locks (3, 4) of the external guide (7) and the internal guide (8).

2. A system for manufacturing thermally insulated non-rigid pipes comprising an arrangement consisting of an elastic conduit (44) inserted into an elastic jacket pipe (45), the inner surface of the jacket pipe (45) and the outer surface of the conduit (44) creating an interspace (18) to be filled with an expanding isolating material (19), the system consisting of a first lower tool (43) and a first upper tool (47),
**characterized in that**
the system further comprises:
a tower (17) with an electrical winch (15) on the top with tie rods (14) made of steel ropes for moving the conduit (44) / jacket pipe (45) arrangement into a vertical position prior to the filling with isolating material (19),
an internal guide (8) built vertically into the middle of the front vertical side of the tower (17), which limits the vertical position of the arrangement,
a boom (6) connectable to a first external guide support (49) of a second upper tool (48) of the jacket pipe (45) and to a second external guide support (46) of a second lower tool (42) of the jacket pipe (45),
a second lower tool (42),
a second upper tool (48) and
a hydraulic lower tool support (51) for reception of a second lower tool (42),
wherein the first lower tool (43) has the shape of a circular plate with a circular ring whose outside diameter is equal to the inside diameter of the conduit (44), the first lower tool (43) and the first upper tool (47) are connectable to each end of the elastic conduit (44), respectively, and
the second lower tool (42) has the shape of a circular plate with a central opening having a diameter greater than the diameter of the elastic conduit (44) and a ring with an outside diameter smaller than the inner diameter of the elastic jacket pipe (45), wherein the second lower tool (42) and the second upper tool (48) are connectable to each end of the elastic jacket pipe (45), respectively.

3. System of claim 2, **characterized in that** the second external guide support (46) comprises two tapered openings and a cut for receiving a support pin (21) of the boom (6).

4. System of claim 2 or 3, **characterized in that** the first external guide support (49) comprises a cut and two centrical openings for the connection of the boom (6).

5. System of any of the claims 2 to 4, **characterized in that** the hydraulic lower tool support (51) consists of a hydraulic crane with a wedge topped by a plate having a semi-circular cut for receiving the lower tool (42) of the jacket pipe (45).

6. System of any of the claims 2 to 5, **characterized in that** the first lower tool (43) of the elastic conduit (44) consists of a central opening on the central plate for blowing-in of air by means of a valve.

7. A system according to any of the claims 1 to 6, further comprising a cart (34) with four wheels and an oscillating axle in-between for inserting the conduit (1, 44) into the jacket pipe (5, 45) by means of a cart lead bar (37) in form of a wedge.

8. A system according to claim 7, **characterized in that** the cart (34) further comprises a limiter (33) in form of an L profile with a hole, fixed to the cart (34) by a screw (35) for positioning the elastic conduit (1, 44) onto the cart (34).

9. A system according to any of the claims 1 to 8, **characterized in that** the system further comprises an acceptance cart (40) with an horizontal arbour for positioning the lower (10, 42, 43) and the upper (11, 47, 48) tools onto the conduit (1, 44) / jacket pipe (5, 45) arrangement.

10. A system according to any of the claims 1 to 9, **characterized in that** the system further comprises a hydraulic platform (38) with one hydraulic cylinder and a steel plate as a support (39) for lifting the conduit (1, 44) / jacket pipe (5, 45) arrangement onto the height of the horizontal arbour of the acceptance cart (40).

11. A system according to any of the claims 1 to 10, **characterized in that** the boom (6) and the tower are built as flat or space grid constructions.

12. A system according to any of the claims 1 to 11, **characterized in that** the upper tool (11, 48) further consist of a two-part cover (29) with an opening for removal of excessed isolating material (19) which is closable by a fixing system (30) in the shape of an inclined edge.

13. A system according to any of the claims 1 to 12, **characterized in that** the system further comprises an upper support (22) of the boom (6) which is connected to the external guide (7) by means of an external guide wedge (23) passing through the external guide lock (3).

14. A system according to any of the claims 1 to 13, **characterized in that** the upper tool (11) further comprises an elastic holder (31) in the shape of a circular tapered two-part wedge with self-locking cone angle for installation of additional elastic installations (36) as water penetrating detecting cables and the like.

15. A system according to any of the claims 1 to 14, **characterized in that** the mixer (26) is insertable through an opening of the upper tool (11, 48) into the interspace (18) and comprises a circular chamber with a tapered contraction followed by an enlargement of the passage leading to an outlet pipe.

16. A method for manufacturing thermally insulated pipes, comprising the steps of:
positioning a conduit (1, 44) for various fluids, with or without additional installations (32) and elastic installations (36), on a cart (34),
insertion the conduit (1, 44) into a jacket pipe (5) by means of the cart (34) along a horizontal bolster via a cart leader bar (37), thus forming a conduit/jacket pipe arrangement
positioning a lower tool (10, 42, 43) and an upper tool (11, 47, 48) by means of a reception cart (40) and a hydraulic platform (38) onto each end of the conduit (1, 44) / jacket pipe (5, 45) arrangement, respectively, the outer surface of the conduit (1, 44), the inner surface of the jacket pipe (5, 45) and the inner surfaces of the lower (10, 42, 43) and the upper tool (11, 47, 48), thus creating a closed volume (18),
connecting a boom (6) to an external guide (7),
connecting the boom (6) to the upper tool (11, 48) and the lower tool (10, 42),
connecting a holder (12,51) to the lower tool (10, 42)
moving the arrangement by a rope (14) into a vertical position, determined by an internal guide (8),
aligning the conduit (1, 44) with the jacket pipe (5,45) by means of an internal guide lock (4),
inserting a mixer (26) into the interspace (18),
injecting an isolating material (19),
removal of the mixer through the upper tool (11, 48),
closing a cover (29) and fixing it by a fixing system (30), wherein a possible excess of the injected insulating material (19) is allowed to escape through an opening of the cover (29).

## Patentansprüche

1. System für die Herstellung von thermisch isolierten starren Rohren, das eine Anordnung enthält, das aus einem Leitungsrohr (1) besteht, das in einem Mantelrohr (5) eingeführt ist, wobei die innere Fläche des Mantelrohres (5) und die äußere Fläche des Leitungsrohres (1) den Zwischenraum (18) bilden, der mit einem expandierenden Isolationsmaterial (19) befüllt wird, das System besteht aus einem unteren Werkzeug (10) und einem oberen Werkzeug (11) für den Einbau auf jedem der Enden der Leitungsrohr/Mantelrohranordnung,
**gekennzeichnet dadurch, dass** das System zusätzlich folgendes beinhaltet:
einen Turm (17) mit elektrischer Winde (15) an der Spitze, mit aus stählernen Schnüren bestehenden Zugbändern (14) für das Bewegen der Leitungsrohr/Mantelrohranordnung in eine vertikale Position vor der Füllung mit dem Isolationsmaterial (19),
eine innere Führung (8), die vertikal in der Mitte der vertikalen Vorderseite des Turms (17) eingebaut ist, die die vertikale Lage der Leitungsrohr/Mantelrohranordnung beschränkt, wobei die innere Führung (8) mit dem oberen Werkzeug (11) mit Hilfe eines inneren Führungsschlosses (4) verbindbar ist,
einen Ausleger (6), der eine äußere Führung (7) aufweist, wobei der Ausleger (6) mit dem oberen Werkzeug (11) mit Hilfe eines äußeren Führungsschlosses (3) und mit dem unteren Werkzeug (10) mit Hilfe einer äußeren Führungsstütze (9) für die Zentrierung des Leitungsrohres (1) innerhalb des Mantelrohres (5) verbindbar ist,
und ein Gestell (13), das einen Halter (12) für das Empfangen des unteren Werkzeugs (10) beinhaltet,
wobei das untere Werkzeug (10) aus einer Kreisscheibe mit einer zentralen Öffnung besteht, die größer ist als der äußere Durchmesser des Leitungsrohres (1), und zwei Ringen, die an jede Seite mit der Kreisscheibe verbunden sind, wobei die Durchmesser der zwei Ringe größer sind als der Durchmesser des Leitungsrohres (1) beziehungsweise Mantelrohres (5), und die Kreisscheibe zwei Bolzen an ihrem Rand für das Verbinden des unteren Werkzeugs (10) mit dem Halter (12) hat,
und das obere Werkzeug (11) aus einer Kreisscheibe besteht mit einer zentralen Öffnung größer als der äußere Durchmesser des Leitungsrohres (1) und zwei Ringen, die an jeder Seite mit der Kreisscheibe verbunden sind, wobei die Durchmesser der zwei Ringe größer sind als der Durchmesser des Leitungsrohres (1) beziehungsweise des Mantelrohres (5) und die Kreisscheibe eingebaute Schlösser (3, 4) für die äußere Führung (7) und innere Führung (8) trägt.

2. System für die Herstellung von thermisch isolierten, nicht starren Rohren, das eine Anordnung enthält, das aus einem elastischen, in ein elastisches Mantelrohr (45) eingeführtes Leitungsrohr (44) besteht, wobei die innere Fläche des Mantelrohres (45) und die äußere Fläche des Leitungsrohres (44) einen Zwischenraum bilden (18), der mit einem expandierenden Isolationsmaterial (19) befüllt wird, und das System aus einem unteren Werkzeug (43) und einem oberen Werkzeug (47) besteht,
**gekennzeichnet dadurch, dass** das System des Weiteren folgendes beinhaltet:
einen Turm (17) mit elektrischer Winde (15) an der Spitze, mit aus stählernen Schnüren bestehenden Zugbändern (14) für das Bewegen der Leitungsrohr/Mantelrohranordnung in eine vertikale Position vor der Füllung mit dem Isolationsmaterial (19),
eine innere Führung (8) eingebaut vertikal in der Mitte der vorderen vertikalen Seite des Turms (17), die die vertikale Lage der Anordnung beschränkt,
einen Ausleger (6), der mit einer ersten äußeren Führungsstütze (49) eines zweiten oberen Werkzeugs (48) des Mantelrohres (45) und mit einer zweiten äußeren Führungsstütze (46) eines zweiten unteren Werkzeugs (42) des Mantelrohres (45) verbindbar ist,
ein zweites unteres Werkzeug (42),
ein zweites oberes Werkzeug (48) und
eine hydraulische Stütze (51) für das untere Werkzeug für das Empfangen des zweiten unteren Werkzeugs (42),
wobei das erste untere Werkzeug (43) die Form einer Kreisscheibe mit einem Kreisring hat, dessen äußerer Durchmesser gleich mit dem inneren Durchmesser des Leitungsrohres (44) ist, das erste untere Werkzeug (43) beziehungsweise das erste obere Werkzeug (47) mit dem jeweiligen Ende des elastischen Leitungsrohres (44) verbindbar sind, und
das zweite untere Werkzeug (42) die Form einer Kreisscheibe mit einer zentralen Öffnung mit einem größeren Durchmesser als der Durchmesser des elastischen Leitungsrohres (44) hat, und einen Ring mit einem äußeren Durchmesser, der kleiner ist als der innere Durchmesser des elastischen Mantelrohres (45), wobei das zweite untere Werkzeug (42) beziehungsweise das zweite obere Werkzeug (48) mit dem jeweiligen Ende des elastischen Mantelrohres (45) verbindbar sind.

3. System gemäß dem Anspruch 2, **gekennzeichnet dadurch, dass** die zweite äußere Führungsstütze (46) zwei konische Öffnungen und eine Einschneidung für das Empfangen eines Stützbolzens (21) des Auslegers (6) beinhaltet.

4. System gemäß dem Anspruch 2 oder 3, **gekennzeichnet dadurch, dass** die erste äußere Führungsstütze (49) eine Einschneidung und zwei zentrale Öffnungen für das Verbinden mit dem Ausleger (6) beinhaltet.

5. System gemäß einem der Ansprüche 2 bis 4, **gekennzeichnet dadurch, dass** die hydraulische Stütze (51) für das untere Werkzeug aus einem hydraulischen Heber mit einem Keil besteht, auf dessen Spitze sich eine Scheibe mit einer halbkreisförmigen Einschneidung für das Empfangen des unteren Werkzeugs (42) des Mantelrohres (45) befindet.

6. System gemäß einem der Ansprüche 2 bis 5, **gekennzeichnet dadurch, dass** das erste untere Werkzeug (43) des elastischen Leitungsrohres (44) eine zentrale Öffnung auf der zentralen Scheibe für das Einblasen von Luft mit Hilfe eines Ventils aufweist.

7. System gemäß einem der Ansprüche 1 bis 6, das zusätzlich einen Wagen (34) mit vier Rädern und einer oszillierenden Achse dazwischen aufweist, für das Einführen des Leitungsrohres (1, 44) in das Mantelrohr (5, 45) mit Hilfe eines Führungssteges (37) für den Wagen in Form eines Keils.

8. System gemäß Anspruch 7, **gekennzeichnet dadurch, dass** der Wagen (34) zusätzlich einen Begrenzer (33) in Form eines L-Profils mit einem Loch aufweist, der mit dem Wagen (34) über eine Schraube (35) verbunden ist, für das Positionieren des elastischen Leitungsrohres (1, 44) auf den Wagen (34).

9. System gemäß einem der Ansprüche 1 bis 8, **gekennzeichnet dadurch, dass** das System zusätzlich einen Empfangswagen (40) mit einer horizontalen Spindel für das Positionieren der unteren Werkzeuge (10, 42, 43) und der oberen Werkzeuge (11, 47, 48) auf der Leitungsrohr (1, 44)/Mantelrohr (5, 45)-Anordung beinhaltet.

10. System gemäß einem der Ansprüche 1 bis 9, **gekennzeichnet dadurch, dass** das System zusätzlich eine hydraulische Plattform (38) mit einem hydraulischen Zylinder und Stahlplatte als Stütze (39) für das Heben der Leitungsrohr (1, 44)/Mantelrohr (5, 45)-Anordung auf die Höhe der horizontalen Spindel des Empfangswagens (40) beinhaltet.

11. System gemäß einem der Ansprüche 1 bis 10, **gekennzeichnet dadurch, dass** der Ausleger (6) und der Turm als flache oder gitterartige Konstruktionen aufgebaut sind.

12. System gemäß einem der Ansprüche 1 bis 11, **gekennzeichnet dadurch, dass** das obere Werkzeug (11, 48) zusätzlich einen zweiteiligen Deckel (29) mit einer Öffnung für das Entfernen von übermäßigem Isolationsmaterial (19), der mit Hilfe eines Befestigungssystems (30) in Form einer schrägen Kante geschlossen werden kann, aufweist.

13. System gemäß einem der Ansprüche 1 bis 12, **gekennzeichnet dadurch, dass** das System zusätzlich eine obere Stütze (22) des Auslegers (6) beinhaltet, die mit der äußeren Führung (7) mittels eines Keils (23) einer äußeren Führung verbunden ist, der durch das äußere Führungsschloss (3) geführt ist.

14. System gemäß einem der Ansprüche 1 bis 13, **gekennzeichnet dadurch, dass** das obere Werkzeug (11) zusätzlich einen elastischen Halter (31) in Form eines kreisförmig zugespitzten zweiteiligen Keils mit selbstschließendem konischem Winkel für den Einbau von zusätzlichen elastischen Installationen (36) beinhaltet, wie Kabel für den Nachweis von eindringendem Wasser und ähnliches.

15. System gemäß einem der Ansprüche 1 bis 14, **gekennzeichnet dadurch, dass** eine Mischanlage (26) durch eine Öffnung des oberen Werkzeugs (11, 48) in den Zwischenraum (18) einführbar ist und eine kreisförmige Kammer mit eine abgeschrägten Verengung aufweist, an die eine Erweiterung des Durchlasses, der zu einem Auslassrohr führt, anschließt.

16. Verfahren für die Herstellung von thermisch isolierten Rohren, das folgende Schritte umfasst:
Positionieren des Leitungsrohres (1, 44) für verschiedene Flüssigkeiten, mit oder ohne zusätzliche Installationen (32) und elastischen Installationen (36), auf den Wagen (34),
Einführen des Leitungsrohres (1, 44) in das Mantelrohr (5) mit Hilfe des Wagens (34) längs einer horizontalen Bühne mittels Führungssteg (37) des Wagens, wodurch eine Leitungsrohr/Mantelrohr-Anordnung gebildet wird,
Positionieren eines unteren Werkzeugs (10, 42, 43) und eines oberen Werkzeugs (11, 47, 48) mit Hilfe eines Empfangwagens (40) und einer hydraulischer Plattform (38) an dem jeweiligen Ende der Leitungsrohr/ Mantelrohr-Anordnung, wobei die äußere Fläche des Leitungsrohres (1, 44), die innere Fläche des Mantelrohres (5, 45) und die inneren Flächen des unteren Werkzeugs (10, 42, 43) und des oberen Werkzeugs (11, 47, 48) somit ein geschlossenes Volumen (18) bilden,
Verbinden des Auslegers (6) mit einer äußeren Führung (7),
Verbinden des Auslegers (6) mit dem oberen Werkzeug (11, 48) und dem unteren Werkzeug (10,42),
Verbinden eines Halters (12,51) mit dem unteren Werkzeug (10, 42),
Bewegen der Anordnung durch Zugbänder (14) in die vertikale Lage, die durch die innere Führung (8) bestimmt ist,
Ausrichten des Leitungsrohres (1, 44) in dem Mantelrohr (5, 45) mit Hilfe eines inneren Führungsschlosses (4),
Einführen der Mischanlage (26) in den Zwischenraum (18),
Einspritzen des Isolationsmaterials (19),
Entfernen der Mischanlage über das obere Werkzeug (11, 48),
Schließen eines Deckels (29) und dessen Befestigung mittels Befestigungssystem (30), wobei einem möglichen Überschuss des Isolationsmaterials (19) erlaubt wird, durch eine Öffnung des Deckels (29) zu entweichen.

## Revendications

1. Le système de fabrication des tuyaux rigides à isolation thermique comprenant une conduite (1) insérée dans une virole tubulaire (5), où surface intérieure de la virole tubulaire (5) et la surface extérieure de la conduite (1) forment un espace intermédiaire (18) qui sera comblé d'un calorifuge (19) à expansion, alors que le système est composé d'un outil inférieur (10) et d'un outil supérieur (11) qui seront installés à chaque extrémité, d'un ensemble conduite/virole tubulaire. Le système comprend encore les éléments suivants:
une tour (17) avec un treuil électrique (15) au sommet, avec des agrafes (14) en câbles d'acier destinées au déplacement de l'ensemble conduite (1)/virole tubulaire (5) dans une position verticale, avant le remplissage avec du calorifuge (19),
un rail de guidage intérieur (8) installé de manière verticale au centre de la face verticale avant de la tour (17), qui délimite la position verticale de l'ensemble conduite (1)/virole tubulaire (5), alors que le rail de guidage intérieur (8) pourra être relier à l'outil supérieur (11) à l'aide de la serrure (4) du rail de guidage intérieur,
une flèche (6) comprenant un rail de guidage extérieur (7), où la flèche pourra être relier à l'outil supérieur (11) à l'aide de la serrure (3) du rail de guidage extérieur et de même à l'outil inférieur (10) à l'aide de l'appui (9) du rail de guidage extérieur afin de centrer la conduite (1) à l'intérieur de la virole tubulaire (5).
et un socle (13) contenant un support (12) de l'outil inférieur (10).
L'outil inférieur (10) est composé d'une dalle circulaire avec un orifice central au diamètre plus important que le diamètre extérieur de la conduite (1) et de deux bagues raccordées à chaque côté de la dalle circulaire, alors que les diamètres des deux bagues sont plus importants que le diamètre de la conduite (1) et de la virole tubulaire (5), de manière régulière. La dalle circulaire dispose de deux chevilles de bord pour le raccordement de l'outil inférieur (10) au support (12).
L'outil supérieur (11) est composé d'une dalle circulaire avec un orifice central au diamètre plus important que le diamètre extérieur de la conduite (1) et de deux bagues raccordées à chaque côté de la dalle circulaire, alors que les diamètres des deux bagues sont à tout point plus importants que le diamètre de la conduite (1) et de la virole tubulaire (5). La dalle circulaire dispose des serrures (3, 4), des rails de guidages extérieurs (7) ainsi que des rails de guidages intérieurs (8).

2. Le système de fabrication des tuyaux non rigides à isolation thermique comprenant une conduite élastique (44) insérée dans une virole tubulaire élastique (45), où surface intérieure de la virole tubulaire (45) et la surface extérieure de la conduite (44) forment un espace intermédiaire (18) qui sera comblé d'un calorifuge (19) à expansion, alors que le système est composé d'un premier outil inférieur (43) et d'un premier outil supérieur (47). Le système comprend
encore des éléments suivants :
une tour (17) avec un treuil électrique (15) au sommet, avec des agrafes (14) en câbles d'acier destinées au déplacement de l'ensemble conduite (44)/virole tubulaire (45) dans une position verticale, avant le positionnement du calorifuge (19),
un rail de guidage intérieur (8) installé de manière verticale au centre de la face verticale avant de la tour (17), qui délimite la position verticale de l'ensemble.
une flèche (6) qui pourra être relier au premier appui (49) du rail de guidage extérieur (49) du second outil supérieur (48) de la virole tubulaire (45) ainsi qu'au second appui (46) du rail de guidage extérieur du second outil inférieur (42) de la virole tubulaire (45).
un second outil inférieur (42),
un second outil supérieur (48), et
un appui hydraulique (51) de l'outil inférieur destiné au support du second outil inférieur (42),
alors que le premier outil inférieur (43) dispose d'une dalle circulaire avec une bague circulaire dont le diamètre extérieur est égal au diamètre intérieur de la conduite (44), le premier outil inférieur (43) et le premier outil supérieur (47) pouvant être raccordés à chaque extrémité de la conduite élastique (44), de manière régulière, alors que
le second outil inférieur (42) dispose d'une dalle circulaire avec un orifice central au diamètre plus important que le diamètre de la conduite élastique (44) et la bague avec un diamètre extérieur inférieur au diamètre intérieur de la virole tubulaire élastique (45), de manière régulière.

3. Conformément à la condition du brevet 2, le second appui (46) du rail de guidage extérieur du système dispose de deux orifices coniques et une incision pour la réception d'une cheville de soutènement (21) de la flèche (6).

4. Conformément aux conditions du brevet 2 ou 3, le système est structuré de manière à ce que le premier appui (49) du rail de guidage extérieur dispose d'une incision et de deux orifices centraux pour le raccordement à la flèche (6).

5. Conformément à n'importe quelle condition du brevet de 2 à 4, le système est structuré de manière à ce que l'appui hydraulique (51) de l'outil inférieur soit composé d'un monte-charge à manivelle, dont le sommet est équipé d'une dalle à l'incision mi-circulaire pour supporter l'outil inférieur (42) de la virole tubulaire (45).

6. Conformément à n'importe quelle condition du brevet de 2 à 5, le système est structuré de manière à ce que le premier outil inférieur (43) de la conduite élastique (44) soit composé d'un orifice central sur la dalle centrale pour le soufflage de l'air à l'aide d'une soupape.

7. Conformément à n'importe quelle condition du brevet de 1 à 6, le système dispose d'un chariot (34) à quatre roues et d'un essieu oscillatoire pour l'insertion de la conduite (1, 44) dans la virole tubulaire (5, 45) à l'aide d'un élément d'introduction du chariot (37) à forme de manivelle.

8. Suivant la condition du brevet 7, le chariot du système (34) dispose d'un élément d'arrêt (33) en forme d'un profilé en L avec un orifice, qui est raccordé au chariot (34) à l'aide d'un boulon (35) pour le positionnement de la conduite (1, 44) sur le chariot (34).

9. Suivant n'importe quelle condition du brevet de 1 à 8, le système dispose d'un chariot supplémentaire de réception (40) avec fuseau horizontal pour l'installation des outils inférieurs (10, 42, 43) et des outils supérieurs (11, 47, 48) sur l'ensemble conduite (1, 44)/virole tubulaire (5, 45).

10. Suivant n'importe quelle condition du brevet de 1 à 9, le système dispose d'une plate-forme hydraulique (38) avec un cylindre hydraulique et une plaque métallique en tant qu'appui (39) pour le soulèvement de l'ensemble conduite (1, 44 )/virole tubulaire ( 5, 45 ) à la hauteur du fuseau horizontal du chariot de réception (40).

11. Conformément à n'importe quelle condition du brevet de 1 à 10, la flèche du système (6) et la tour sont exécutées en structure plate ou en grillage.

12. Conformément à n'importe quelle condition du brevet de 1 à 11, les outils supérieurs du système (11, 48) sont composés d'un revêtement double (29) avec un orifice destiné à l'enlèvement du calorifuge excédent (19), qui peut être fermé à l'aide d'un système de fixation (30) en forme d'un bord oblique.

13. Conformément à n'importe quelle condition du brevet de 1 à 12, le système dispose d'un appui supérieur (22) de la flèche (6) qui est relié au rail de guidage extérieur (7) à l'aide de la manivelle (23) du rail de guidage extérieur qui passe à travers la serrure (3) du rail de guidage extérieur.

14. Conformément à n'importe quelle condition du brevet de 1 à 13, l'outil supérieur du système (11) dispose d'un support élastique (31) en forme d'une manivelle pointue double avec un auto verrouillage de l'angle conique, destinée à l'installation de la tuyauterie élastique supplémentaire (36) dans le cas où l'eau pénètre à travers des câbles de détection etc.

15. Conformément à n'importe quelle condition du brevet de 1 à 14, le malaxeur du système (26) peut être inséré à travers l'orifice des outils supérieurs (11, 48) dans l'espace intermédiaire (18) comprenant une chambre circulaire à rétrécissement conique, derrière lequel suit un élargissement du passage menant à l'extérieur du tuyau.

16. Procédé de fabrication des tuyaux à isolation thermique, comprenant des pas suivants :
l'installation de la conduite (1, 44) pour divers liquides, avec ou sans tuyauterie supplémentaire (32) et tuyauterie élastique (36), sur le chariot (34),
l'insertion de la conduite (1, 44) dans la virole tubulaire (5) à l'aide du chariot (34) le long de la sous-couche horizontale, en utilisant l'élément d'introduction (37) du chariot, formant ainsi l'ensemble conduite/virole tubulaire,
l'installation des outils inférieurs (10, 42, 43) et des outils supérieurs (11, 47, 48) à l'aide du chariot de réception (40) et la plate-forme hydraulique (38) à chaque extrémité de l'ensemble conduite (1, 44)/virole tubulaire (5, 45), de manière régulière, alors que de cette façon, la surface extérieure de la conduite (1, 44), la surface intérieure de la virole tubulaire (5, 45) et les surfaces intérieures des outils inférieurs (10, 42, 43) et des outils supérieurs (11, 47, 48), forment un volume fermé (18),
le raccordement de la flèche (6) au rail de guidage extérieur (7),
le raccordement de la flèche (6) aux outils supérieurs (11, 48) et aux outils inférieurs (10,42),
le raccordement des supports (12, 51) aux outils inférieurs (10, 42),
le déplacement de l'ensemble à l'aide de l'agrafe (14) dans la position verticale, qui est déterminée par le rail de guidage intérieur (8),
le réglage de la conduite (1, 44) par rapport à la virole tubulaire (5, 45) à l'aide de la serrure (4) du rail de guidage intérieur,
l'insertion du malaxeur (26) dans l'espace intermédiaire (18),
l'injection du calorifuge (19),
l'enlèvement du malaxeur par des outils supérieurs (11, 48)
la ferméture du revêtement (29) et sa fixation à l'aide du système de fixation (30), permettant à l'excédent du calorifuge injecté (19) de s'échapper à travers l'orifice du revêtement (29).
